# EUROPEAN PATENT SPECIFICATION

(11) **EP 4 466 681 B1**
(45) Date of publication and mention of the grant of the patent: **08.07.2026**
(21) Application number: 22786048.3
(22) Date of filing: 29.09.2022
(51) Int. Cl.: G06V 20/69, G06V 10/764, G01N 35/00, G06T 7/00

(54) **METHOD AND SYSTEM FOR OPERATING A LABORATORY AUTOMATION SYSTEM**
VERFAHREN UND SYSTEM ZUM BETREIBEN EINES LABORAUTOMATISIERUNGSSYSTEMS
PROCÉDÉ ET SYSTÈME POUR FAIRE FONCTIONNER UN SYSTÈME D'AUTOMATISATION DE LABORATOIRE

(30) Priority: 22.11.2021 EP 21209562
(43) Date of publication of application: 27.11.2024
(73) Proprietor: Roche Diagnostics GmbH, 68305 Mannheim (DE); F. Hoffmann-La Roche AG, 4070 Basel (CH)
(72) Inventor: REIN, Michael, 71636 Ludwigsburg (DE)
(74) Representative: Bittner, Thomas L.
(86) International application number: PCT/EP2022/077134
(87) International publication number: WO 2023/088600

(56) References cited:
- US-A1- 2017 124 704
- US-A1- 2018 164 335

## Description

The present disclosure refers to a method for operating a laboratory automation system, and a system for operating a laboratory automation system.

### Background

Laboratory automation systems are for example employed for determining samples, such as samples of a bodily fluid, in an automated way. Each sample is typically received in a sample container which is processed via the laboratory automation system.

Laboratory automation systems can comprise a plurality of units. A laboratory automation system usually comprises a plurality of laboratory stations or devices such as, for example, a pre-analytical, an analytical or a post-analytical station. Typically, the sample containers are transported on transport carriers between different stations of the system via a sample distribution system or a transportation system. The transport carriers with or without sample containers may be moved along a line for processing the samples. Sample containers may be fed into the laboratory automation system via trays which comprise a plurality of sample containers. A placement device may pick a sample container from the tray and place the sample container in a reception place of a transport carrier or vice versa.

Document US 2018 / 0 045 747 A1 discloses a method of tube slot localization using a tray coordinate system and a camera coordinate system. The method includes receiving, a series of images from at least one camera of a tray comprising tube slots arranged in a matrix of rows and columns. The method includes determining calibration information to provide mapping of locations from the tray coordinate system to locations from the camera coordinate system and automatically aligning the tray based on the encoder value and calibration information.

Document US 10 319 092 B2 relates to a method for detecting properties of sample tubes that includes extracting image patches substantially centered on a tube slot of a tray or a tube top in a slot. For each image patch, the method includes assigning a first location group defining whether the image patch is an image center, a corner of an image or a middle edge of an image, selecting a trained classifier based on the first location group, and determining whether each tube slot contains a tube.

Document US 10 290 090 B2 discloses a method of using image-based tube top circle detection that includes extracting, from one of a series of images of a tube tray, a region of interest patch having a target tube top circle and boundaries constrained by two-dimensional projections of different types of tube top circle centers.

Document US 10 140 705 B2 relates to methods and systems for detecting properties of sample tubes in a laboratory environment including a drawer vision system that can be trained and calibrated.

In document WO 2019 013 960 A1, methods for image-based detection of the tops of sample tubes used in an automated diagnostic analysis system are disclosed that are based on a convolutional neural network to pre-process images of the sample tube tops to intensify the tube top circle edges while suppressing the edge response from other objects that may appear in the image.

Document EP 3 581 935 A1 pertains to a method for operating a system for the automatic detection of laboratory work items and their state in the area of target storage positions of a laboratory work area.

Document US 10 274 505 B2 is related to an analytical laboratory system and a method for processing samples, in which a sample container is transported from an input area to a distribution area by a gripper comprising a means for inspecting a tube. An image is captured of the sample container and analyzed to determine a sample container identification.

In document WO 2019 084 468 A1, systems and methods are provided for recognizing various sample containers carried in a rack. Sample containers in the rack are identified and various characteristics associated with the containers and the rack are detected and evaluated to determine the validity and types of the containers in the rack.

Document US 9 135 515 B2 discloses a method for visually inspecting pelletized samples. The method generates an inspection image of the bottom of a sample tube holder.

The system in document EP 2 776 844 B1 includes an image acquisition device configured to obtain one or more images of sample containers in a sample container holder and an image analysis device coupled to the image acquisition device.

In document US 10 509 047 B2, a method and a device for handling sample tubes are presented. A position of the sample tube is identified and the sample tube is handled depending thereon.

Document EP 3 330 713 A1 relates to a laboratory handling system, comprising a number of racks, each adapted to carry a number of laboratory sample containers, a rack placement unit, wherein a rack is placed on the rack placement unit, and a rack sensing unit, wherein the rack sensing unit is adapted to sense a position and / or a type of the rack being placed on the rack placement unit.

Document US 2017 124 704 A1 discloses methods and systems for detecting properties of sample tubes in a laboratory environment including a drawer vision system that can be trained and calibrated. Images of a tube tray captured by at least one camera are analyzed to extract image patches that allow a processor to automatically determine if a tube slot is occupied, if the tube has a cap, and if the tube has a tube top cup. The processor can be trained using a random forest technique and a plurality of training image patches. Cameras can be calibrated using a three-dimensional calibration target that can be inserted into the drawer.

US 2018/164335 A1 discloses: Systems and methods for use in an in vitro diagnostics setting may include an automation track, a plurality of carriers configured to carry a plurality of sample vessels along the automation track, and a characterization station including a plurality of optical devices. A processor, in communication with the characterization station, can be configured to analyze images to automatically characterize physical attributes related to each carrier and/or sample vessel. A method may include receiving a plurality of images from a plurality of optical devices of a characterization station, wherein the plurality of images comprise images from a plurality of perspectives of a sample vessel being transported by a carrier, automatically analyzing the plurality of images, using a processor, to determine certain characteristics of the sample vessel, and automatically associating the characteristics of the sample vessel with the carrier in a database.

### Summary

It is an object of the present disclosure to provide a method for operating a laboratory automation system and a laboratory automation system with improved flexibility and safety regarding the placement of sample containers.

For solving the problem, a method for operating a laboratory automation system according to independent claim 1 is provided. Further, a system for operating a laboratory automation system according to independent claim 16 is provided. Further embodiments are disclosed in dependent claims.

According to one aspect, a method for operating a laboratory automation system is provided, the laboratory automation system comprising a carrier comprising a reception place for receiving a sample container configured to contain a sample to be analyzed by a laboratory device; a placement device configured to pick and place the sample container; an imaging device; and a data processing device comprising at least one processor and a memory. The method comprises detecting an image of the reception place by the imaging device; deter mining whether the reception place is free for receiving the sample container, and whether the reception place is configured to receive the sample container, by applying a machine learning algorithm for image analysis of the image of the reception place in the data processing device; and placing the sample container in the reception place by the placement device if the reception place is determined as free and configured to receive the sample container.

According to another aspect, a laboratory automation system is provided. The laboratory automation system comprises a carrier comprising a reception place for receiving a sample container configured to contain a sample to be analyzed by a laboratory device; a placement device configured to pick and place the sample container; an imaging device; and a data processing device comprising at least one processor and a memory; and is configured to detect an image of the reception place by the imaging device; determine whether the reception place is free for receiving the sample container, and whether the reception place is configured to receive the sample container, by applying a machine learning algorithm for image analysis of the image of the reception place in the data processing device; and place the sample container in the reception place by the placement device if the reception place is determined as free and configured to receive the sample container.

As result, errors in the laboratory automation system due to placing a wrong type of sample container or carrier into a machine, placing at wrong position, inaccurate placing, or not leaving a reception place free can be handled and / or prevented.

Within the context of the present disclosure, a carrier may generally refer to a device for receiving one sample container or a plurality of sample containers. The carrier may also refer to a rack or a tray.

The system may comprise the laboratory device. The laboratory device may e.g. be configured for analyzing samples. The sample may contain a bodily fluid.

The reception place may comprise a recess (slot) within the carrier. Additionally or alternatively, the reception place may comprise a protrusion on the carrier. The reception place may have a reception place bottom surface and a reception place lateral surface. A reception place depth of the reception place may be a vertical difference between the reception place bottom surface and a top edge of the reception place. A reception place bottom surface shape and / or a reception place top surface shape may be one of a circular disc, a polygon, a rectangle, a square, and an ellipse. A reception place bottom angle between the reception place bottom surface and the reception place lateral surface may be greater than or equal to 90°, preferably greater than or equal to 90° and less than 150°, more preferably greater than or equal to 90° and less than 100°, most preferably greater than or equal to 90° and less than 95°.

The reception place, in particular the slot, may have a one of a cylindrical shape, a conical shape, a polyhedral shape, a cubic shape, and a cuboid shape. The cylindrical shape may be one of a circular cylindrical shape, an elliptical cylindrical shape, and a prism shape.

The sample container may have a container bottom surface, a container lateral surface, and a container top surface. A container height of the sample container may correspond to the vertical difference between the container bottom surface and the container top surface.

A container bottom surface shape and / or a container top surface shape may be one of a circular disc, a polygon, a rectangle, a square, and an ellipse. A container bottom angle between the container bottom surface and the container lateral surface may be greater than or equal to 90°, preferably greater than or equal to 90° and less than 150°, more preferably greater than or equal to 90° and less than 100°, most preferably greater than or equal to 90° and less than 95°. An angle difference between the reception place bottom angle and the container bottom angle may be less than 30°, preferably less than 10°. The reception place bottom angle and the container bottom angle may be the same.

The sample container may have a one of a cylindrical shape, a conical shape, a polyhedral shape, a cubic shape, and a cuboid shape. The reception place and the sample container may have the same shape or a different shape. The sample container may be a sample tube.

The determining whether the reception place is configured to receive the sample container may comprise determining a reception place type from the image using the machine learning algorithm.

The determining whether the reception place is configured to receive the sample container may be carried out in reaction to determining whether the reception place is free for receiving the sample container. In particular, the determining whether the reception place is configured to receive the sample container may be carried out in reaction to having determined that the reception place is free for receiving the sample container. In other words, it may be provided that determining whether the reception place is configured to receive the sample container is carried out (only) for reception places free for receiving the sample container.

It may also be provided that determining whether the reception place is free for receiving the sample container and determining whether the reception place is configured to receive the sample container is carried out simultaneously, in particular by applying the machine learning algorithm for image analysis of the image of the reception place in the data processing device,

The determining of the reception place type from the image may comprise classifying the reception place type by the machine learning algorithm. In this or other embodiments, the machine learning algorithm may for example comprise an artificial neural network. The machine learning algorithm may comprise a supervised learning algorithm, such as a support vector machine, decision tree learning, or similarity learning. The machine learning algorithm may also comprise a pattern matching algorithm. The reception place type may for example be associated with a class label.

The method may further comprise comparing the reception place type with a container type of the sample container, and determining the reception place being configured to receive the sample container if the reception place type is assigned to the container type. In an embodiment it may be provided that each reception place type is assigned to at least one, preferably exactly one container type. The reception place type may be assigned to the container type if the reception place type and the container type match geometrically.

In another embodiment, the method may further comprise the reception place type indicating a reception place bottom diameter being less than a bottom diameter upper bound and / or greater than a bottom diameter lower bound. The reception place type may also comprise a reception place top diameter being less than a top diameter upper bound and / or greater than a top diameter lower bound. The reception place bottom diameter may be the diameter of the reception place bottom surface. The reception place top diameter may be the diameter of the area surrounded by a top edge of the reception place.

The bottom diameter upper bound may be between 7 mm and 20 mm, preferably between 9 mm and 15 mm, more preferably 13 mm (depending on the reception place type). The bottom diameter lower bound may be between 6 mm and 19 mm, preferably between 8.5 mm and 14.5 mm, more preferably 12.8 mm. The top diameter upper bound may be between 7 mm and 20 mm, preferably between 9 mm and 15 mm, more preferably 13 mm. The top diameter lower bound may be between 6 mm and 19 mm, preferably between 8.5 mm and 14.5 mm, more preferably 12.8 mm.

The bottom diameter upper bound may be less than the top diameter upper bound. Alternatively, the bottom diameter upper bound and the top diameter upper bound may be same. The bottom diameter lower bound may be less than the top diameter lower bound. Alternatively, the bottom diameter lower bound and the top diameter lower bound may be same. The bottom diameter lower bound may be less than the bottom diameter upper bound. Alternatively, the bottom diameter lower bound and the bottom diameter upper bound may be the same. The top diameter lower bound may be less than the top diameter upper bound. Alternatively, the top diameter lower bound and the top diameter upper bound may be the same.

The reception place may also be determined as being configured to receive the sample container if at least a first difference of the reception place bottom diameter and the container bottom diameter is between 0.0 % and 5.0 % of the reception place bottom diameter, preferably between 0.5 % and 2.0 % of the reception place bottom diameter, more preferably 1.0 % of the reception place bottom diameter. The first difference may alternatively be between 0 % and 5.0 % of the container bottom diameter, preferably between 0 % and 2.0 % of the container bottom diameter, more preferably 0.1 % of the container bottom diameter. Further alternatively, the first difference may be between 0 mm and 4.0 mm, preferably between 0 mm and 2.0 mm, more preferably 0.1 mm.

The method may further comprise the reception place type indicating a reception place depth being less than a depth upper bound and / or greater than a depth lower bound. The depth upper bound may be between 50 mm and 210 mm, preferably between 80 mm and 180 mm, more preferably 100 mm. The depth lower bound may be between 40 mm and 200 mm, preferably between 75 mm and 175 mm, more preferably 99 mm. The depth lower bound may be less than the depth upper bound. Alternatively, the depth lower bound and the depth upper bound may be the same.

The reception place may also be determined as being configured to receive the sample container if at least a second difference between the reception place depth and the container height is between 1 % and 80 % of the reception place depth, preferably between 5 % and 50 % of the reception place depth, more preferably 20 % of the reception place depth. The second difference may also be between 1 % and 80 % of the container height, preferably between 5 % and 50 % of the container height, more preferably 20 % of the container height. Further alternatively, the second difference may be between 1.0 mm and 5.0 cm, preferably between 5.0 mm and 2.5 cm, more preferably 2.0 cm.

In an embodiment, the method may further comprise the reception place type indicating a reception place bottom angle, between a reception place bottom surface and a reception place lateral surface of the reception place, being less than a bottom angle upper bound and / or greater than a bot-tom angle lower bound. The bottom angle upper bound may be between 90° and 150°, preferably between 90° and 110°, more preferably between 90° and 95°. The bottom angle lower bound may be between 89° and 170°, preferably between 90° and 105°, more preferably between 90° and 92°. The reception place type may comprise a reception place top angle being less than a top angle upper bound and / or greater than a top angle lower bound.

The top angle upper bound may be between 90° and 150°, preferably between 90° and 110°, more preferably between 90° and 95°. The top angle lower bound may be between 89° and 170°, preferably between 90° and 105°, more preferably between 90° and 92°.

The reception place type may further comprise at least one of a reception place bottom surface shape, a reception place top surface shape, a reception place lateral surface shape, and a reception place notch indicator indicative of a presence of a lateral notch at the reception place.

The method may also comprise determining at least one of the reception place bottom surface shape, the reception place top surface shape, the reception place bottom diameter, the reception place top diameter, the reception place depth, the reception place bottom angle, the reception place top angle, the reception place notch indicator from the determined reception place type. Further, the method may comprise comparing the at least one of the reception place bottom surface shape, the reception place top surface shape, the reception place bottom diameter, the reception place top diameter, the reception place depth, the reception place bottom angle, the reception place top angle, the reception place notch indicator from the determined reception place type with a corresponding container type value. From the comparing, the reception place may also be determined as being configured to receive the sample container.

In general, at least one of the reception place bottom surface shape, the reception place top surface shape, the reception place bottom diameter, the reception place top diameter, the reception place depth, the reception place bottom angle, the reception place top angle, the reception place notch indicator, the lateral positioning, and the reception place being free for receiving the sample container may be determined by applying the machine learning algorithm.

The reception place being free for receiving the sample container may in particular comprise the reception place being empty, in particular, the reception place not having received a (further) sample container. The reception place not being free for receiving the sample container may comprise the reception place not being empty, in particular, the reception place having received a (further) sample container.

The method may comprise providing container type data indicative of the container type in the memory. The container type data may be indicative of at least one of the following: container bottom surface shape, container top surface shape, container bottom diameter, container top diameter, container height, container bottom angle, container top angle, and a container notch indicator indicative of a presence of a lateral notch at the container.

The method may comprise: scanning the sample container by a scanning device; and, in response to the scanning of the sample container by the scanning device, providing the container type from a database. The scanning may comprise scanning a tag of the sample container. The tag may for example be a bar code or a QR code.

The database may be stored in the memory of the data processing device. Alternatively, the database may be stored in an external data processing device and, preferably, be transmitted from the external data processing device to the data processing device. The database may comprise assignments of reception place types to container types and / or assignments of container types to reception place types.

Alternatively, the container type may be provided via time scheduling information and / or location information data. For example, sample containers of a specific container type (corresponding to a specific reception place type) may be provided at a specific time and / or at a specific location. The container type may be provided from the database.

The method may further comprise: detecting a second image of the reception place by the imaging device; and determining the container type from the second image using the machine learning algorithm. Alternatively, the method may further comprise detecting the second image of the reception place by a second imaging device different from the imaging device, wherein the providing of the container type may comprise determining the container type from the second image using the machine learning algorithm. The second imaging device may be a camera. The image and / or the second image may be transmitted from the imaging device (respectively, the second imaging device) to the data processing device.

Placing the sample container in the reception place may comprise moving the sample container by the placement device in a horizontal and / or a vertical direction. The placement device may comprise a gripping device for mechanically gripping and / or releasing the sample container.

If the reception place is determined being not free and / or not configured (not suitable) to receive the sample container, an error signal may be generated by the data processing device. In this case, the sample container may not be placed in the reception place.

The method may further comprise determining, from the image, a lateral positioning of the reception place, e.g., via the machine learning algorithm or a further machine learning algorithm. The lateral positioning may for example be with respect to at least one of the carrier, the placement device, a distribution device containing the placement device, and the laboratory automation system. Determining the lateral positioning of the reception place may comprise determining a center point of the reception place. The reception place may be determined as not configured to receive the sample container if the center point of the reception place is offset from a reference point beyond a threshold value.

The detecting of the image may comprise detecting the image of a single reception place. Alternatively, detecting the image may comprise detecting the image of a plurality of reception places. The image may comprise a top view of the reception place. The image may also comprise a side view, a bottom view, or a diagonal view of the reception place.

The method may comprise providing the imaging device attached to the placement device. In particular, the imaging device may be configured to move together with the placement device during operation of the placement device. Alternatively, the imaging device may be (physically) separate from the placement device. The imaging device may for example be a camera.

The method may further comprise determining at least one trained pattern via the machine learning algorithm using training images indicative of reception places, in particular indicative of reception place types. The training may be carried out in the data processing device. Alternatively, the training may be carried out in a further external data processing device. A trained model may then be transmitted from the further external data processing device to the data processing device.

The determining of the at least one trained pattern may comprise processing training images indicative of different reception place types, in particular with different reception place bottom surface shapes, reception place top surface shapes, reception place bottom diameters, reception place top diameters, reception place depths, reception place bottom angles, reception place top angles, and reception place notch indicators. Further, the training images may be indicative of the reception place either being free or not being free for receiving the sample container.

The determined trained pattern(s) / trained model(s) may be provided in the data processing device. Determining whether the reception place is configured to receive the sample container may comprise processing the at least one trained pattern. In particular, classifying the reception place type may comprise processing the at least one trained pattern.

The placing of the sample container in the reception place comprises verifying an expected container height of the sample container by a (e.g. vertical) movement of the placement device. Preferably, a further trained pattern may be determined via the machine learning algorithm using a verification result of the expected container height. Alternatively, the at least one trained pattern is further determined via the machine learning algorithm using the verification result of the expected container height.

Verifying the expected container height of the sample container may for example comprise recording a vertical distance by which the placement device has been moved for placing the sample container into the reception place. From the vertical distance, a measured container height of the sample container can be determined, e.g., by subtracting an offset value from the vertical distance. The offset value may be dependent on at least one of a first default vertical positioning of the placement device, a second default vertical positioning of the carrier, a carrier height, and a vertical gripping position of the placement device when gripping the sample container for placement, in particular a vertical gripping position of the placement device relative to the sample container.

The expected container height is determined from the scanning of the sample container by the scanning device and / or by determining the container type from the second image.

In case the measured container height is equal to or within a permissible limit of the expected container height, the verification result is assigned as positive. Otherwise, the verification result may be assigned as negative. The permissible limit may for example be less than 5 % of the expected container height, preferably less than 1 % of the expected container height.

The embodiments described above in connection with the method for operating a laboratory automation system may be provided correspondingly for the laboratory automation system.

### Description of further embodiments

In the following, further embodiments, by way of example, are described with reference to figures. In the figures show:
- Fig. 1: a schematic representation of a laboratory automation system;
- Fig. 2: a representation of a carrier and a sample container from a side view; and
- Fig. 3: a representation for method for operating a laboratory automation system.

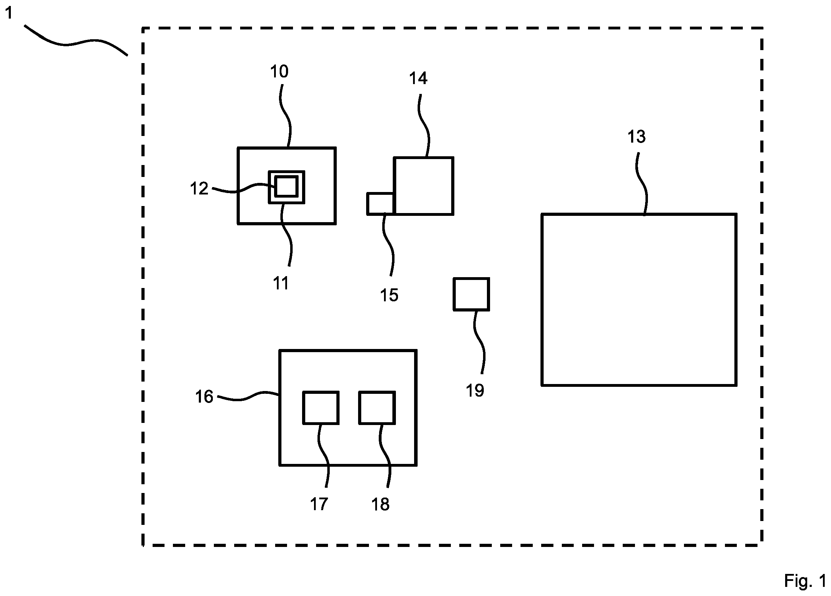

Fig. 1 shows a graphical representation of a laboratory automation system 1. The laboratory automation system 1 comprises a carrier 10 comprising a reception place 11 for receiving a sample container 12 configured to contain a sample to be analyzed by a laboratory device 13. The laboratory automation system further comprises a placement device 14 configured to pick and place the sample container 12, an imaging device 15, such as a camera attached to the placement device 14, and a data processing device 16 comprising at least one processor 17 and a memory 18. Further, a scanning device 19 (for example, a bar code scanner) can be provided.

The placement device 14 comprises a gripping device for mechanically gripping the sample container 12 in order to pick and place the sample container 12.

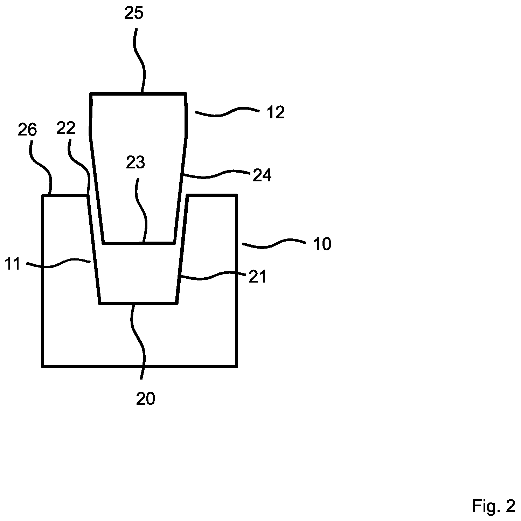

Fig. 2 shows a graphical representation of the carrier 10 (with the reception place 11) and the sample container 12 from a side view. In the shown embodiment, the reception place 11 corresponds to a recess (slot) within the carrier 10. The reception place 11 has a reception place bottom surface 20, a reception place lateral surface 21, and a reception place top edge 22. A reception place depth of the reception place 11 corresponds to the vertical difference between the reception place bottom surface 20 and the reception place top edge 22.

In case a reception place bottom angle, the angle between the reception place bottom surface 20 and the reception place lateral surface 21, is 90°, the reception place depth is equal to the vertical length of the reception place lateral surface 21. The reception place bottom surface 20 may be a circular disk. If in this case the reception place bottom angle is 90°, the reception place 11 has a (circular) cylindrical shape. A reception place bottom width, a reception place bottom length, and a reception place bottom diameter may respectively correspond to the width, length, and diameter of the reception place bottom surface 20. A reception place top width, a reception place top length, and a reception place top diameter may respectively correspond to the width, length, and diameter of the area surrounded by the top edge 22.

A reception place top angle corresponds to the angle between reception place lateral surface 21 and a carrier top surface 26.

Correspondingly, the sample container 12 has a container bottom surface 23, a container lateral surface 24, and a container top surface 25. A container height of the sample container 12 corresponds to the vertical difference between the container bottom surface 23 and the container top surface 25. The container bottom surface 23 may be a circular disk. In this case, the sample container 12 may have a (circular) cylindrical shape.

A container bottom width, a container bottom length, and a container bottom diameter respectively correspond to the width, length, and diameter of the container bottom surface 23. A container top width, a container top length, and a container top diameter respectively correspond to the width, length, and diameter of the container top surface 25.

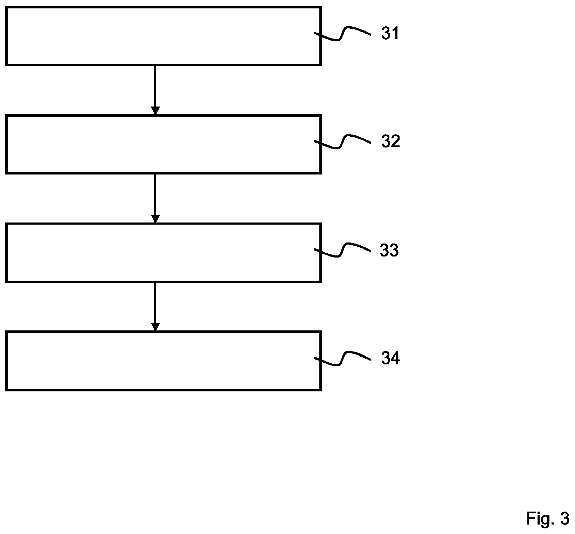

Fig. 3 shows a graphical representation of a method for operating a laboratory automation system.

In a first step 31, trained patterns are determined using a machine learning algorithm, which may, e.g., comprise an artificial neural network. Determining the trained patterns may comprise processing training images with different reception place types, e.g. comprising different reception place bottom surface shapes, reception place top surface shapes, reception place bottom diameters, reception place top diameters, reception place depths, reception place bottom angles, reception place top angles, and reception place notch indicators. The trained patterns are provided in the first data processing device 16.

In a second step 32, the image of the reception place 11 is detected by the imaging device 15. To this end, the imaging device 15 attached to the placement device 14 may be moved into a position above the carrier 10 with the reception place 11.

In a third step 33, the data processing device 16 determines whether the reception place 11 is free for receiving the sample container 12 and whether the place type of the reception place 11 is configured to receive the sample container 12. Hereto, the image of the reception place 11 is analyzed using a machine learning algorithm image analysis for determining the determining the reception place type.

In a fourth step 34, in reaction to the reception place 11 being determined as both free and configured to receive the sample container 12, the sample container is placed in the reception place 11 by the placement device 14.

## Claims

1. Method for operating a laboratory automation system (1), the laboratory automation system (1) comprising:
- a carrier (10) comprising a reception place (11) for receiving a sample container (12) configured to contain a sample to be analyzed by a laboratory device (13);
- a placement device (14) configured to pick and place the sample container (12);
- an imaging device (15); and
- a data processing device (16) comprising at least one processor (17) and a memory (18);
wherein the method comprises:
- detecting an image of the reception place (11) by the imaging device (15);
- determining whether
- the reception place (11) is free for receiving the sample container (12) and
- the reception place (11) is configured to receive the sample container (12),
by applying a machine learning algorithm for image analysis of the image of the reception place (11) in the data processing device (16), wherein determining whether the reception place (11) is configured to receive the sample container (12) comprises processing at least one trained pattern to determine the reception place type; and
- placing the sample container (12) in the reception place (11) by the placement device (14) if the reception place (11) is determined as free and configured to receive the sample container (12)
wherein placing the sample container (12) in the reception place (11) comprises verifying an expected container height of the sample container (12), said expected container height determined from scanning the sample container (12) and/or from determining the container type from an image of the container (12), wherein verifying the expected container height comprises determining a measured container height of the sample container (12) by recording a vertical distance by which the placement device has been moved for placing the sample container into the reception place,
wherein the verification result is assigned as positive if the measured container height is equal to or within a permissible limit of the expected container height, and wherein the at least one trained pattern is further determined via the machine learning algorithm using the verification result of the expected container height.

2. Method of claim 1, wherein the determining whether the reception place (11) is configured to receive the sample container (12) comprises determining a reception place type from the image using the machine learning algorithm.

3. Method of claim 2, wherein the determining of the reception place type from the image comprises classifying the reception place type by the machine learning algorithm.

4. Method of claim 2 or 3, further comprising comparing the reception place type with a container type of the sample container (12), and determining the reception place (11) being configured to receive the sample container (12) if the reception place type is assigned to the container type.

5. Method of one of the claims 2 to 4, further comprising the reception place type indicating a reception place bottom diameter being less than a bottom diameter upper bound and / or greater than a bottom diameter lower bound.

6. Method of one of the claims 2 to 5, further comprising the reception place type indicating a reception place depth being less than a depth upper bound and / or greater than a depth lower bound.

7. Method of one of the claims 2 to 6, further comprising the reception place type indicating a reception place bottom angle, between a reception place bottom surface and a reception place lateral surface of the reception place, being less than a bottom angle upper bound and / or greater than a bottom angle lower bound.

8. Method of one of the claims 4 to 7, further comprising providing container type data indicative of the container type in the memory (18).

9. Method of claim 8, further comprising
- scanning the sample container (12) by a scanning device (19); and
- in response to the scanning of the sample container (12) by the scanning device (19), providing the container type from a database.

10. Method of claim 8, further comprising
- detecting a second image of the reception place (11) by the imaging device (15); and
- determining the container type from the second image using the machine learning algorithm.

11. Method of one of the preceding claims, further comprising determining, from the image, a lateral positioning of the reception place (11).

12. Method of one of the preceding claims, wherein the detecting of the image comprises detecting the image of a single reception place (11).

13. Method of one of the preceding claims, further comprising providing the imaging device (15) attached to the placement device (14).

14. Method of one of the preceding claims, further comprising determining a trained pattern via the machine learning algorithm using training images indicative of a plurality of reception places (11).

15. Method of one of the preceding claims, wherein a further trained pattern is determined via the machine learning algorithm using the verification result of the expected container height.

16. A laboratory automation system (1), comprising:
- a carrier (10) comprising a reception place (11) for receiving a sample container (12) configured to contain a sample to be analyzed by a laboratory device (13);
- a placement device (14) configured to pick and place the sample container (12);
- an imaging device (15); and
- a data processing device (16) comprising at least one processor (17) and a memory (18); and
configured to:
- detect an image of the reception place (11) by the imaging device (15);
- determine whether
- the reception place (11) is free for receiving the sample container (12) and
- a reception place type of the reception place (11) is suitable for receiving the sample container (12),
by applying a machine learning algorithm for image analysis of the image of the reception place (11) in the data processing device (16), wherein determining whether the reception place (11) is configured to receive the sample container (12) comprises processing at least one trained pattern to determine the reception place type; and
- place the sample container (12) in the reception place (11) by the placement device (14) if the reception place (11) is determined as free and suitable for receiving the sample container (12);
wherein placing the sample container (12) in the reception place (11) comprises verifying an expected container height of the sample container (12), said expected container height determined from scanning the sample container (12) and/or from determining the container type from an image of the container (12), wherein verifying the expected container height comprises determining a measured container height of the sample container (12), by recording a vertical distance by which the placement device has been moved for placing the sample container into the reception place, wherein the verification result is assigned as positive if the measured container height is equal to or within a permissible limit of the expected container height, and wherein the at least one trained pattern is further determined via the machine learning algorithm using the verification result of the expected container height.

## Patentansprüche

1. Verfahren zum Betreiben eines Laborautomatisierungssystems (1), wobei das Laborautomatisierungssystem (1) Folgendes umfasst:
- einen Träger (10), umfassend eine Aufnahmestelle (11) zum Aufnehmen eines Probenbehälters (12), der so eingerichtet ist, dass er eine Probe enthält, die durch eine Laborvorrichtung (13) analysiert werden soll;
- eine Platzierungsvorrichtung (14), die so eingerichtet ist, dass sie den Probenbehälter (12) greift und platziert;
- eine Bildgebungsvorrichtung (15); und
- eine Datenverarbeitungsvorrichtung (16), umfassend mindestens einen Prozessor (17) und einen Speicher (18);
wobei das Verfahren Folgendes umfasst:
- Erfassen eines Bildes der Aufnahmestelle (11) durch die Bildgebungsvorrichtung (15);
- Bestimmen, ob
- die Aufnahmestelle (11) frei zur Aufnahme des Probenbehälters (12) ist und
- die Aufnahmestelle (11) zur Aufnahme des Probenbehälters (12) eingerichtet ist, durch Anwenden eines Algorithmus für maschinelles Lernen zur Bildanalyse des Bildes der Aufnahmestelle (11) in der Datenverarbeitungsvorrichtung (16), wobei das Bestimmen, ob die Aufnahmestelle (11) zur Aufnahme des Probenbehälters (12) eingerichtet ist, das Verarbeiten mindestens eines trainierten Musters umfasst, um den Aufnahmestellen-Typ zu bestimmen; und
- Platzieren des Probenbehälters (12) in der Aufnahmestelle (11) durch die Platzierungsvorrichtung (14), wenn bestimmt ist, dass die Aufnahmestelle (11) frei und zur Aufnahme des Probenbehälters (12) eingerichtet ist,
wobei das Platzieren des Probenbehälters (12) in der Aufnahmestelle (11) das Verifizieren einer erwarteten Behälterhöhe des Probenbehälters (12) umfasst, wobei die erwartete Behälterhöhe aus dem Abtasten des Probenbehälters (12) und/oder aus dem Bestimmen des Behältertyps anhand eines Bildes des Behälters (12) bestimmt wird, wobei das Verifizieren der erwarteten Behälterhöhe das Bestimmen einer gemessenen Behälterhöhe des Probenbehälters (12) durch Aufzeichnen eines vertikalen Abstands umfasst, um den die Platzierungsvorrichtung zum Platzieren des Probenbehälters in die Aufnahmestelle bewegt wurde,
wobei das Verifizierungsergebnis als positiv zugeordnet wird, wenn die gemessene Behälterhöhe gleich oder innerhalb einer zulässigen Grenze der erwarteten Behälterhöhe ist, und wobei das mindestens eine trainierte Muster ferner über den Algorithmus für maschinelles Lernen unter Verwendung des Verifizierungsergebnisses der erwarteten Behälterhöhe bestimmt wird.

2. Verfahren nach Anspruch 1, wobei das Bestimmen, ob die Aufnahmestelle (11) zur Aufnahme des Probenbehälters (12) eingerichtet ist, das Bestimmen eines Aufnahmestellen-Typs anhand des Bildes unter Verwendung des Algorithmus für maschinelles Lernen umfasst.

3. Verfahren nach Anspruch 2, wobei das Bestimmen des Aufnahmestellen-Typs anhand des Bildes das Klassifizieren des Aufnahmestellen-Typs durch den Algorithmus für maschinelles Lernen umfasst.

4. Verfahren nach Anspruch 2 oder 3, ferner umfassend das Vergleichen des Aufnahmestellen-Typs mit einem Behältertyp des Probenbehälters (12) und das Bestimmen, dass die Aufnahmestelle (11) zur Aufnahme des Probenbehälters (12) eingerichtet ist, wenn der Aufnahmestellen-Typ dem Behältertyp zugeordnet ist.

5. Verfahren nach einem der Ansprüche 2 bis 4, ferner umfassend, dass der Aufnahmestellen-Typ einen Bodendurchmesser der Aufnahmestelle anzeigt, der unter einer oberen Grenze des Bodendurchmessers und/oder über einer unteren Grenze des Bodendurchmessers liegt.

6. Verfahren nach einem der Ansprüche 2 bis 5, ferner umfassend, dass der Aufnahmestellen-Typ eine Tiefe der Aufnahmestelle anzeigt, die unter einer oberen Grenze der Tiefe und/oder über einer unteren Grenze der Tiefe liegt.

7. Verfahren nach einem der Ansprüche 2 bis 6, ferner umfassend, dass der Aufnahmestellen-Typ einen Bodenwinkel der Aufnahmestelle zwischen einer Aufnahmestellen-Bodenfläche und einer Aufnahmestellen-Seitenfläche der Aufnahmestelle anzeigt, der unter einer oberen Grenze des Bodenwinkels und/oder über einer unteren Grenze des Bodenwinkels liegt.

8. Verfahren nach einem der Ansprüche 4 bis 7, ferner umfassend das Bereitstellen von Behältertypdaten, die den Behältertyp im Speicher (18) anzeigen.

9. Verfahren nach Anspruch 8, ferner umfassend
- Abtasten des Probenbehälters (12) durch eine Abtastvorrichtung (19); und
- Bereitstellen des Behältertyps aus einer Datenbank als Reaktion auf das Abtasten des Probenbehälters (12) durch die Abtastvorrichtung (19).

10. Verfahren nach Anspruch 8, ferner umfassend
- Erfassen eines zweiten Bildes der Aufnahmestelle (11) durch die Bildgebungsvorrichtung (15); und
- Bestimmen des Behältertyps anhand des zweiten Bildes unter Verwendung des Algorithmus für maschinelles Lernen.

11. Verfahren nach einem der vorhergehenden Ansprüche, ferner umfassend das Bestimmen einer seitlichen Positionierung der Aufnahmestelle (11) anhand des Bildes.

12. Verfahren nach einem der vorhergehenden Ansprüche, wobei das Erfassen des Bildes das Erfassen des Bildes einer einzelnen Aufnahmestelle (11) umfasst.

13. Verfahren nach einem der vorhergehenden Ansprüche, ferner umfassend das Bereitstellen der Bildgebungsvorrichtung (15) derart, dass sie an der Platzierungsvorrichtung (14) angebracht ist.

14. Verfahren nach einem der vorhergehenden Ansprüche, ferner umfassend das Bestimmen eines trainierten Musters über den Algorithmus für maschinelles Lernen unter Verwendung von Trainingsbildern, die eine Vielzahl von Aufnahmestellen (11) anzeigen.

15. Verfahren nach einem der vorhergehenden Ansprüche, wobei ein weiteres trainiertes Muster über den Algorithmus für maschinelles Lernen unter Verwendung des Verifizierungsergebnisses der erwarteten Behälterhöhe bestimmt wird.

16. Laborautomatisierungssystem (1), umfassend:
- einen Träger (10), umfassend eine Aufnahmestelle (11) zum Aufnehmen eines Probenbehälters (12), der so eingerichtet ist, dass er eine Probe enthält, die durch eine Laborvorrichtung (13) analysiert werden soll;
- eine Platzierungsvorrichtung (14), die so eingerichtet ist, dass sie den Probenbehälter (12) greift und platziert;
- eine Bildgebungsvorrichtung (15); und
- eine Datenverarbeitungsvorrichtung (16), umfassend mindestens einen Prozessor (17) und einen Speicher (18); und
zu Folgendem eingerichtet:
- Erfassen eines Bildes der Aufnahmestelle (11) durch die Bildgebungsvorrichtung (15);
- Bestimmen, ob
- die Aufnahmestelle (11) frei zur Aufnahme des Probenbehälters (12) ist und
- ein Aufnahmestellen-Typ der Aufnahmestelle (11) zur Aufnahme des Probenbehälters (12) geeignet ist,
durch Anwenden eines Algorithmus für maschinelles Lernen zur Bildanalyse des Bildes der Aufnahmestelle (11) in der Datenverarbeitungsvorrichtung (16), wobei das Bestimmen, ob die Aufnahmestelle (11) zur Aufnahme des Probenbehälters (12) eingerichtet ist, das Verarbeiten mindestens eines trainierten Musters umfasst, um den Aufnahmestellen-Typ zu bestimmen; und
- Platzieren des Probenbehälters (12) in der Aufnahmestelle (11) durch die Platzierungsvorrichtung (14), wenn bestimmt wird, dass die Aufnahmestelle (11) frei und zur Aufnahme des Probenbehälters (12) geeignet ist;
wobei das Platzieren des Probenbehälters (12) in der Aufnahmestelle (11) das Verifizieren einer erwarteten Behälterhöhe des Probenbehälters (12) umfasst, wobei die erwartete Behälterhöhe aus dem Abtasten des Probenbehälters (12) und/oder aus dem Bestimmen des Behältertyps anhand eines Bildes des Behälters (12) bestimmt wird, wobei das Verifizieren der erwarteten Behälterhöhe das Bestimmen einer gemessenen Behälterhöhe des Probenbehälters (12) durch Aufzeichnen eines vertikalen Abstands umfasst, um den die Platzierungsvorrichtung zum Platzieren des Probenbehälters in die Aufnahmestelle bewegt wurde,
wobei das Verifizierungsergebnis als positiv zugeordnet wird, wenn die gemessene Behälterhöhe gleich oder innerhalb einer zulässigen Grenze der erwarteten Behälterhöhe ist, und wobei das mindestens eine trainierte Muster ferner über den Algorithmus für maschinelles Lernen unter Verwendung des Verifizierungsergebnisses der erwarteten Behälterhöhe bestimmt wird.

## Revendications

1. Procédé pour faire fonctionner un système d'automatisation de laboratoire (1), le système d'automatisation de laboratoire (1) comprenant :
- un support (10) comprenant un emplacement de réception (11) pour recevoir un récipient d'échantillon (12) configuré pour contenir un échantillon à analyser par un dispositif de laboratoire (13) ;
- un dispositif de placement (14) configuré pour saisir et placer le récipient d'échantillon (12) ;
- un dispositif d'imagerie (15) ; et
- un dispositif de traitement de données (16) comprenant au moins un processeur (17) et une mémoire (18) ;
dans lequel le procédé comprend :
- la détection d'une image de l'emplacement de réception (11) par le dispositif d'imagerie (15) ;
- la détermination si
- l'emplacement de réception (11) est libre pour recevoir le récipient d'échantillon (12) et
- l'emplacement de réception (11) est configuré pour recevoir le récipient d'échantillon (12),
en appliquant un algorithme d'apprentissage automatique pour l'analyse d'image de l'image de l'emplacement de réception (11) dans le dispositif de traitement de données (16), dans lequel la détermination si l'emplacement de réception (11) est configuré pour recevoir le récipient d'échantillon (12) comprend le traitement d'au moins un modèle entraîné pour déterminer le type d'emplacement de réception ; et
- le placement du récipient d'échantillon (12) dans l'emplacement de réception (11) par le dispositif de placement (14) si l'emplacement de réception (11) est déterminé comme libre et configuré pour recevoir le récipient d'échantillon (12)
dans lequel le placement du récipient d'échantillon (12) dans l'emplacement de réception (11) comprend la vérification d'une hauteur de récipient attendue du récipient d'échantillon (12), ladite hauteur de récipient attendue étant déterminée à partir du balayage du récipient d'échantillon (12) et/ou à partir de la détermination du type de récipient à partir d'une image du récipient (12), dans lequel la vérification de la hauteur de récipient attendue comprend la détermination d'une hauteur de récipient mesurée du récipient d'échantillon (12) en enregistrant une distance verticale selon laquelle le dispositif de placement a été déplacé pour placer le récipient d'échantillon dans l'emplacement de réception,
dans lequel le résultat de vérification est attribué comme positif si la hauteur de récipient mesurée est égale à ou se situe dans une limite admissible de la hauteur de récipient attendue, et dans lequel l'au moins un modèle entraîné est en outre déterminé par l'intermédiaire de l'algorithme d'apprentissage automatique en utilisant le résultat de vérification de la hauteur de récipient attendue.

2. Procédé selon la revendication 1, dans lequel la détermination si l'emplacement de réception (11) est configuré pour recevoir le récipient d'échantillon (12) comprend la détermination d'un type d'emplacement de réception à partir de l'image en utilisant l'algorithme d'apprentissage automatique.

3. Procédé selon la revendication 2, dans lequel la détermination du type d'emplacement de réception à partir de l'image comprend la classification du type d'emplacement de réception par l'algorithme d'apprentissage automatique.

4. Procédé selon la revendication 2 ou 3, comprenant en outre la comparaison du type d'emplacement de réception à un type de récipient du récipient d'échantillon (12), et la détermination que l'emplacement de réception (11) est configuré pour recevoir le récipient d'échantillon (12) si le type d'emplacement de réception est attribué au type de récipient.

5. Procédé selon l'une des revendications 2 à 4, comprenant en outre le type d'emplacement de réception indiquant qu'un diamètre de fond d'emplacement de réception est inférieur à une limite supérieure de diamètre de fond et/ou supérieur à une limite inférieure de diamètre de fond.

6. Procédé selon l'une des revendications 2 à 5, comprenant en outre le type d'emplacement de réception indiquant qu'une profondeur d'emplacement de réception est inférieure à une limite supérieure de profondeur et/ou supérieure à une limite inférieure de profondeur.

7. Procédé selon l'une des revendications 2 à 6, comprenant en outre le type d'emplacement de réception indiquant qu'un angle de fond d'emplacement de réception, entre une surface de fond d'emplacement de réception et une surface latérale d'emplacement de réception de l'emplacement de réception, est inférieur à une limite supérieure d'angle de fond et/ou supérieur à une limite inférieure d'angle de fond.

8. Procédé selon l'une des revendications 4 à 7, comprenant en outre la fourniture de données de type de récipient indicatives du type de récipient dans la mémoire (18).

9. Procédé selon la revendication 8, comprenant en outre
- le balayage du récipient d'échantillon (12) par un dispositif de balayage (19) ; et
- en réponse au balayage du récipient d'échantillon (12) par le dispositif de balayage (19), la fourniture du type de récipient à partir d'une base de données.

10. Procédé selon la revendication 8, comprenant en outre
- la détection d'une seconde image de l'emplacement de réception (11) par le dispositif d'imagerie (15) ; et
- la détermination du type de récipient à partir de la seconde image en utilisant l'algorithme d'apprentissage automatique.

11. Procédé selon l'une des revendications précédentes, comprenant en outre la détermination, à partir de l'image, d'un positionnement latéral de l'emplacement de réception (11).

12. Procédé selon l'une des revendications précédentes, dans lequel la détection de l'image comprend la détection de l'image d'un emplacement de réception (11) unique.

13. Procédé selon l'une des revendications précédentes, comprenant en outre la fourniture du dispositif d'imagerie (15) attaché au dispositif de placement (14).

14. Procédé selon l'une des revendications précédentes, comprenant en outre la détermination d'un modèle entraîné par l'intermédiaire de l'algorithme d'apprentissage automatique en utilisant des images d'entraînement indicatives d'une pluralité d'emplacements de réception (11).

15. Procédé selon l'une des revendications précédentes, dans lequel un modèle entraîné supplémentaire est déterminé par l'intermédiaire de l'algorithme d'apprentissage automatique en utilisant le résultat de vérification de la hauteur de récipient attendue.

16. Système d'automatisation de laboratoire (1), comprenant :
- un support (10) comprenant un emplacement de réception (11) pour recevoir un récipient d'échantillon (12) configuré pour contenir un échantillon à analyser par un dispositif de laboratoire (13) ;
- un dispositif de placement (14) configuré pour saisir et placer le récipient d'échantillon (12) ;
- un dispositif d'imagerie (15) ; et
- un dispositif de traitement de données (16) comprenant au moins un
processeur (17) et une mémoire (18) ; et
configuré pour :
- détecter une image de l'emplacement de réception (11) par le dispositif d'imagerie (15) ;
- déterminer si
- l'emplacement de réception (11) est libre pour recevoir le récipient d'échantillon (12) et
- un type d'emplacement de réception de l'emplacement de réception (11) est approprié pour recevoir le récipient d'échantillon (12),
en appliquant un algorithme d'apprentissage automatique pour l'analyse d'image de l'image de l'emplacement de réception (11) dans le dispositif de traitement de données (16), dans lequel la détermination si l'emplacement de réception (11) est configuré pour recevoir le récipient d'échantillon (12) comprend le traitement d'au moins un modèle entraîné pour déterminer le type d'emplacement de réception ; et
- placer le récipient d'échantillon (12) dans l'emplacement de réception (11) par le dispositif de placement (14) si l'emplacement de réception (11) est déterminé comme libre et approprié pour recevoir le récipient d'échantillon (12) ;
dans lequel le placement du récipient d'échantillon (12) dans l'emplacement de réception (11) comprend la vérification d'une hauteur de récipient attendue du récipient d'échantillon (12), ladite hauteur de récipient attendue étant déterminée à partir du balayage du récipient d'échantillon (12) et/ou à partir de la détermination du type de récipient à partir d'une image du récipient (12), dans lequel la vérification de la hauteur de récipient attendue comprend la détermination d'une hauteur de récipient mesurée du récipient d'échantillon (12), en enregistrant une distance verticale selon laquelle le dispositif de placement a été déplacé pour placer le récipient d'échantillon dans l'emplacement de réception,
dans lequel le résultat de vérification est attribué comme positif si la hauteur de récipient mesurée est égale à ou se situe dans une limite admissible de la hauteur de récipient attendue, et dans lequel l'au moins un modèle entraîné est en outre déterminé par l'intermédiaire de l'algorithme d'apprentissage automatique en utilisant le résultat de vérification de la hauteur de récipient attendue.
